# EUROPEAN PATENT SPECIFICATION

(11) **EP 2 650 186 B1**
(45) Date of publication and mention of the grant of the patent: **08.08.2018**
(21) Application number: 13162795.2
(22) Date of filing: 08.04.2013
(51) Int. Cl.: B60L 15/38, B60L 11/08, B61C 7/04, B60L 11/18

(54) **Drive system and control method of train**
Antriebssystem und Steuerverfahren eines Zuges
Système d'entraînement et procédé de commande de train

(30) Priority: 13.04.2012 JP 2012091500
(43) Date of publication of application: 16.10.2013
(73) Proprietor: Hitachi, Ltd., Chiyoda-ku Tokyo 100-8280 (JP)
(72) Inventor: Araki, Daijiro, Chiyoda-ku, Tokyo 100-8220 (JP); Mochizuki, Kento, Chiyoda-ku, Tokyo 100-8220 (JP); Shimada, Motomi, Chiyoda-ku, Tokyo 100-8220 (JP); Nagasu, Masahiro, Chiyoda-ku, Tokyo 100-8220 (JP)
(74) Representative: Gill, Stephen Charles

(56) References cited:
- JP-A- 2006 238 542
- JP-A- 2011 142 701
- JP-A- 2011 189 876
- US-A1- 2008 053 402

## Description

### Technical Field

The present invention relates to a method for controlling a train with at least two or more railway vehicles coupled together, the vehicles being equipped with engines such as diesel engines.

### Background

Japanese Published Unexamined Patent Application No. 2008-54408 discloses a diesel hybrid railway vehicle equipped with an engine, such as a diesel engine, and with a storage battery, wherein: (1) when the vehicle is stopped at a station, the engine is stopped and the supply of power from the storage battery to auxiliary equipment, such as an air conditioner and lighting, is performed, on condition that the amount of charge of the storage battery is within a predetermined range; (2) when the vehicle departs from a station, the engine is started and the supply of power from the engine to an inverter and the auxiliary equipment is performed until vehicle speed has reached a given value (hereinafter, assuming a vehicle speed of A km/h) ; (3) Thereafter, when the vehicle is coasting, the engine is stopped and the supply of power from the storage battery to the auxiliary equipment, such as the air conditioner and lighting, is performed, on condition that the amount of charge of the storage battery is within a predetermined range; and (4) when the vehicle is braking, the supply of power from the storage battery to the auxiliary equipment is performed with the engine stopped, on condition that the amount of charge of the storage battery is within a predetermined range.

Furthermore, in Japanese Published Unexamined Patent Application No. 2007-28874, it is disclosed that the start/stop or operating conditions of plural engines are individually controlled so that the discharge current of a storage battery does not exceed an allowable value determined depending on a state, such as temperature, of the storage battery, thereby preventing deterioration of the storage battery.

JP A 2006 238542 proposes a train controller for hybrid rolling stock. JP A 2011 142701 proposes a train set including coupled cars having an integrated controller.

### SUMMARY

Unfortunately, in the above-described Japanese Published Unexamined Patent Application No. 2008-54408, because when the vehicle is stopped at a station, the engine is stopped and the supply of power from the storage battery to the auxiliary equipment is performed, the engine noise within the station yard can be reduced when the train is stopped, while, when the train departs from the station, the engine is controlled to start, resulting in engine noise within the station yard.

Furthermore, in the above-described Japanese Published Unexamined Patent Application No. 2007-28874, although the start/stop and operating conditions of the plural engines are individually controlled depending on a state, such as temperature, of the storage battery, no consideration is given to the engine noise within the station yard. Therefore, at the time of engine starting, vehicles located toward the front of the train leave the station platform, while some vehicles located toward the rear of the train may remain at the station platform. In this case, there is a problem in that the engines mounted on the vehicles remaining at the station platform are started, resulting in engine noise within the station platform.

Accordingly, an object of the present invention is to reduce noise within a station platform by controlling engine noise generated when a train departs from or stops at a station.

According to an aspect of the present invention, there is provided method for controlling a train according to claim 1.

### Brief Description of the Drawings

FIG. 1 illustrates the basic construction of rolling stock according to embodiments of the present invention;
FIG. 2 illustrates a method for individually controlling engines when a train departs from a station in accordance with a first embodiment of the present invention;
FIG. 3 illustrates a method for individually controlling the engines when the train arrives at a station in accordance with the first embodiment of the present invention;
FIG. 4 shows a relationship between engine output and engine rotational speed;
FIG. 5 illustrates a method for individually controlling the engines when the train departs from a station in accordance with a third embodiment of the present invention;
FIG. 6 illustrates a method for individually controlling the engines when the train arrives at a station in accordance with the third embodiment of the present invention;
FIG. 7 illustrates a method for individually controlling the engines when the train accelerates in accordance with a fifth embodiment of the present invention; and
FIG. 8 illustrates an alternative construction of the rolling stock according to embodiments of the present invention.

### Detailed Description

Hereinafter, embodiments of the present invention will be described with reference to the accompanying drawings.

### First Embodiment

This embodiment is an embodiment of the present invention for reducing noise within station platforms in a train that includes plural vehicles equipped with engines and storage batteries.

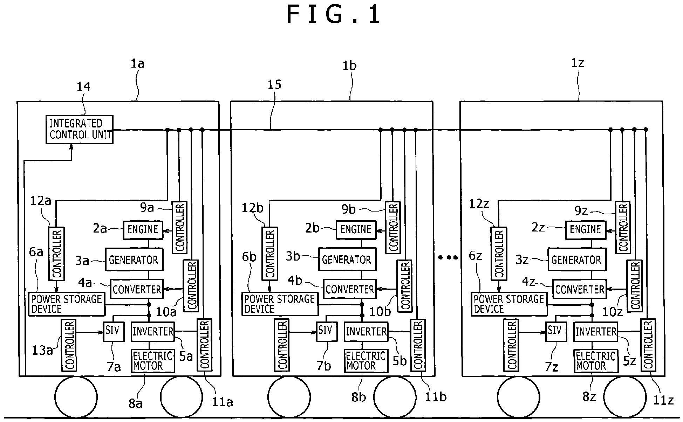

FIG. 1 illustrates a first basic construction of rolling stock according to embodiments of the present invention. In FIG. 1, there are shown only a leading vehicle 1a and two intermediate vehicles 1b and 1z out of the plural vehicles constituting the train. Embodiments of the present invention will be described using the three vehicles as an example, although any number of intermediate vehicles is possible if the number of intermediate vehicles is two or more.

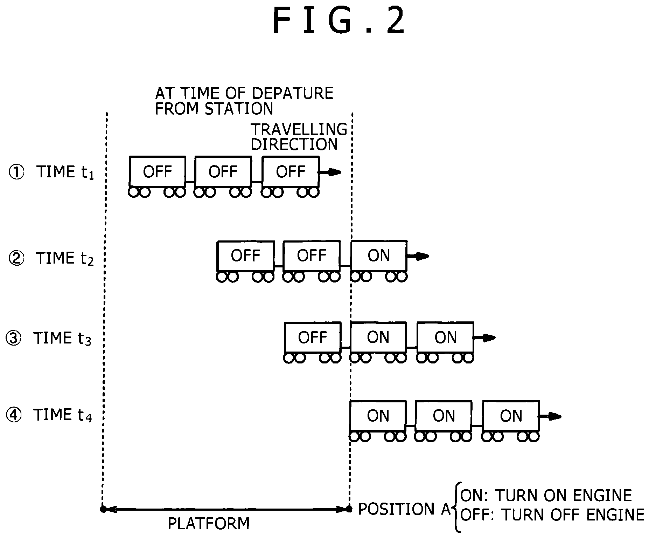

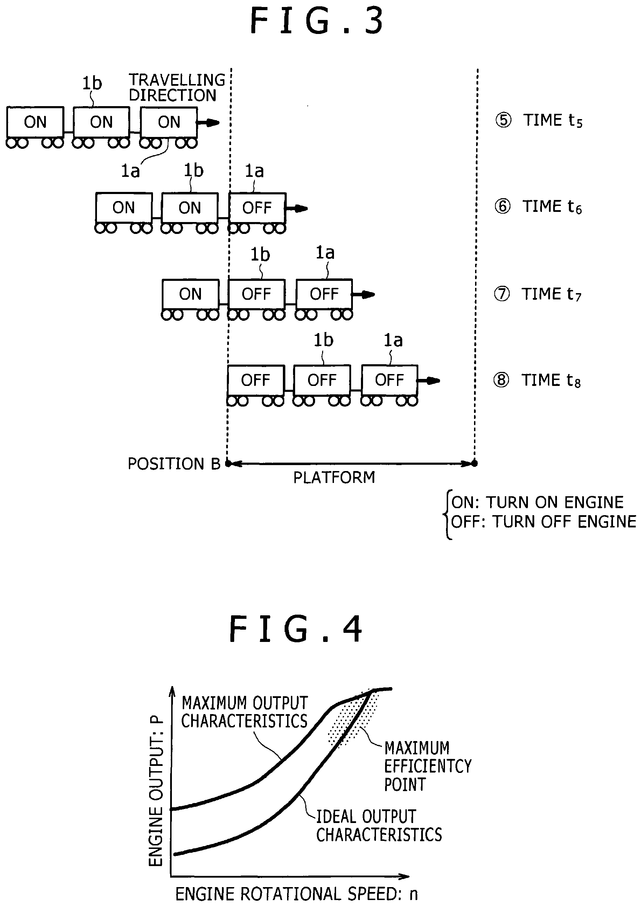

Furthermore, FIGS. 2 and 3 illustrate a rolling stock control method according to a first embodiment of the present invention.

As shown in FIG. 1, the rolling stock according to embodiments of the present invention is a train with plural railway vehicles coupled together. The vehicles 1a to 1z include: engines 2a to 2z; generators 3a to 3z that are driven by the engines 2a to 2z; converters 4a to 4z that convert alternating current from the generators 3a to 3z into direct current; inverters 5a to 5z that convert the direct current from the converters 4a to 4z into variable voltage, variable frequency alternating current; power storage devices 6a to 6z that are connected in parallel with outputs of the converters 4a to 4z to supply direct current to the inverters 5a to 5z; auxiliary power units (i.e., static inverters (SIVs)) 7a to 7z that are connected in parallel with outputs of the converters 4a to 4z to supply direct current to auxiliary equipment such as an air conditioner and lighting; and AC electric motors 8a to 8z that are driven by the inverters 5a to 5z, each of the vehicles 1a to 1z including at least the one or more AC electric motors. Although in embodiments of the present invention, it is also intended that passenger coaches not equipped with engines, generators, inverters, and electric motors be interposed among the vehicles la to 1z shown in FIG. 1, such passenger coaches are omitted for ease of explanation.

It should be noted that the engines 2a to 2z, the converters 4a to 4z, the inverters 5a to 5z, the power storage devices 6a to 6z, and the auxiliary power units (SIVs) 7a to 7z are controlled by engine controllers 9a to 9z, converter controllers 10a to 10z, inverter controllers 11a to 11z, power storage controllers 12a to 12z, and auxiliary power controllers 13a to 13z, respectively. Here, the reference number represents equipment mounted on each of the vehicles 1a to 1z (number 1 denotes a vehicle; 2, an engine; 3, a generator, etc....), and the alphabetic letter suffix represents vehicle number (suffix "a" denotes Vehicle 1; b, Vehicle 2; c, Vehicle 3, etc....). That is, the combination of a number and an alphabetic letter specifies which vehicle the equipment is mounted on. For example, reference sign 2a denotes "the engine mounted on Vehicle 1", and reference sign 3c denotes "the generator mounted on Vehicle 3".

In this embodiment, the start/stop of the plural engines 2a to 2z mounted on the vehicles 1a to 1z are individually controlled on the basis of train running position information.

More specifically, an integrated control unit 14 that exercises overall control over the engine controllers 9a to 9z of the engines 2a to 2z is provided in the leading vehicle 1a where a driver's cab is located, and a communication line 15 is connected between the integrated control unit 14 and the engine controllers 9a to 9z so that the start/stop of the engines 2a to 2z can be individually controlled on the basis of engine control commands from the integrated control unit 14. Here, the integrated control unit 14 is configured to, when obtaining train running position information, determine which vehicle (engine) has left a station platform by considering previously-obtained information on the length of the vehicles 1a to 1z (or information on the installation intervals between the engines 2a to 2z mounted on the vehicles 1a to 1z) and issue an engine control command for starting the engine mounted on a vehicle that has left the station platform.

It should be noted that the integrated control unit 14 does not need to be mounted on the leading vehicle 1a where the driver's cab is located, and the integrated control unit 14 can be mounted on any of the vehicles 1a to 1z. Furthermore, the integrated control unit 14 obtains train running position information from outside and issues engine control commands (the start/stop of the engines 2a to 2z) on the basis of the obtained train running position information, thereby individually controlling the start/stop of the engines 2a to 2z of the vehicles 1a to 1z according to the running position.

Here, while the above description is in terms of the case where the integrated control unit 14 issues engine control commands for the engines 2a to 2z on the vehicles 1a to 1z on the basis of train running position information, the integrated control unit 14 may issue engine control commands for the engines 2a to 2z on the basis of train running speed information or train running time information. At the time of departing from or stopping at the station, the train slows down with approach towards its stopping position in the station, while the train speeds up gradually with distance from its stopping position in the station. Therefore, the integrated control unit 14 may identify the vehicle that has left the station platform, on the basis of running speed information. Also, because train operations follow almost the same acceleration process every operation, the integrated control unit 14 may identify the vehicle that has left the station platform, on the basis of running time information showing the time that has elapsed since departure.

FIG. 2 shows a method for individually controlling the engines when the train departs from the station. When the train departs from the station, firstly, the leading vehicle 1a passes through an end (position A) of the station platform. Until the leading vehicle 1a has passed through the end (position A) of the station platform (time t₁), all the engines 2a to 2z are stopped, and the supply of power from the power storage devices 6a to 6z to the inverters 5a to 5z and the auxiliary power units 7a to 7z is performed. At time t₂, when the leading vehicle 1a passes through the end (position A) of the station platform, the integrated control unit 14 gives a start command to the engine 2a of the leading vehicle 1a to start the engine 2a. Furthermore, at time t₃, when the second vehicle 1b passes through the end (position A) of the station platform, the integrated control unit 14 gives a start command to the engine 2b of the second vehicle 1b to start the engine 2b. Subsequently, in the same manner as above, the engines 2c to 2z mounted on the vehicles 1c to 1z are sequentially started each time the vehicles 1c to 1z in the train pass through the end (position A) of the station platform.

Thus, as shown in FIG. 2, when the train departs from the station, the engines are started sequentially from those on the vehicles toward the front of the train, in the order in which the vehicles leave the station platform (pass through the position A).

The following is one possible method to reduce noise within station platforms : a train is accelerated only by the power from storage batteries without starting engines at the time of departure from a station, and then when the speed reaches A km/h, it is determined that the train is a predetermined distance or more away from the station, and the engines are started. In this method, however, because the power required to drive the train needs to be supplied only by the storage batteries until vehicles equipped with the engines have left the station platform completely, there have been problems in that large-capacity storage batteries are required and in that required drive power cannot be obtained, resulting in a reduction in train acceleration performance. For example, in the case where the engine is mounted only on a leading vehicle, the leading vehicle equipped with the engine can immediately leave the station platform if the train moves forward, however on the other hand, if the train moves rearward, it takes a long time before the vehicle equipped with the engine can leave the station platform, resulting in the above-described problems of the need for large-capacity storage batteries and a reduction in train acceleration performance.

Also in a train which has plural vehicles equipped with engines as disclosed in Japanese Published Unexamined Patent Application No. 2007-28874, if the engines of the plural vehicles are all started when the speed reaches A km/h, the vehicles located toward the front of the train leave the station platform when the engines are started, while some vehicles located toward the rear of the train may remain at the station platform. In this case, it takes a long time before the vehicles equipped with the engines in the train can leave the station platform completely, which also causes the above-described problems of the need for large-capacity storage batteries and a reduction in acceleration performance.

On the other hand, according to the method shown in FIG. 2, the engines are started sequentially from those mounted on the vehicles having left the station platform, thereby allowing quick starting of the plural engines while reducing noise within the station platform. Consequently, it is possible to address the above-described problems of the need for large-capacity storage batteries and a reduction in acceleration performance.

Furthermore, in a train in which plural vehicles equipped with engines are coupled together, when the engines are all started, under conditions, such as low vehicle speed conditions, where the power required to drive the train (hereinafter referred to as required drive power) is low, the output load per engine becomes low, resulting in a problem of a reduction in engine efficiency. On the other hand, according to the method shown in FIG. 2, because the engines are sequentially started sequentially from those mounted on the vehicles having left the station platform, the number of operating engines is small and the vehicle speed increases under conditions where the vehicle speed is low and the power output required to drive the train is low, while the number of operating engines increases as the power output required to drive the train increases. Thus, the decrease in efficiency per engine can be avoided.

Next, FIG. 3 shows a method for individually controlling the engines when the train arrives at the station. When the train arrives at the station, firstly, the leading vehicle 1a passes through an end (position B) of the station platform. At time t₆, when the leading vehicle 1a passes through the end (position B) of the station platform, the integrated control unit 14 gives a stop command to the engine 2a mounted on the leading vehicle 1a to stop the engine 2a. At this time, in the leading vehicle 1a, the engine 2a stops, and therefore the supply of power from the power storage device 6a to the inverter 5a and the auxiliary power unit 7a is performed. Furthermore, at time t₇, when the second vehicle 1b passes through the end (position B) of the station platform, the integrated control unit 14 gives a stop command to the engine 2b mounted on the second vehicle 1b to stop the engine 2b. Subsequently, in the same manner as above, the engines 2c to 2z mounted on the vehicles 1c to 1z are sequentially stopped each time the vehicles 1c to 1z in the train pass through the end (position B) of the station platform.

Thus, as shown in FIG. 3, when the train arrives at the station, the engines are stopped sequentially from those on the vehicles toward the front of the train, in the order in which the vehicles approach the station platform (pass through the position B).

Here, examples of vehicle position detection methods include a method using position detectors such as transponders (radios), optical sensors, and infrared sensors. The position detectors are installed on the ground and vehicle to detect that a vehicle has passed through a predetermined position. The integrated control unit 14 receives, from the position detector installed on vehicle, a signal indicating that the vehicle has passed through the predetermined position, and, on the basis of the position information, individually controls the start/stop of the engines 2a to 2z mounted on the vehicles 1a to 1z. Here, the position detector installed on vehicle may be mounted on each of the vehicles 1a to 1z. Alternatively, the arrangement may be such that the position detector is only mounted on the leading vehicle 1a and the passage of the second and subsequent vehicles 1b to 1z through the position is calculated on the basis of the passage of the first vehicle 1a, the lengths of the vehicles 1a to 1z as previously stored in the integrated control unit 14, etc.

As another position detection method, GPS (Global Positioning System) may be used. The integrated control unit 14 receives, from the GPS a signal indicating that a vehicle has passed through a predetermined position and calculates the passage of the vehicles 1a to 1z through the position .on the basis of the lengths of the vehicles 1a to 1z as previously stored in the integrated control unit 14, and, on the basis of the position information, individually controls the start/stop of the engines 2a to 2z mounted on the vehicles 1a to 1z.

Although in this embodiment, the control action at the time of departure from station as shown in FIG. 2 and the control action at the time of arrival at the station as shown in FIG. 3 are described, both control functions are not always necessary, and at least either one of the control functions is sufficient.

Although in this embodiment, the control is performed so that the engines on the train are started or stopped sequentially from those mounted on the vehicles located toward the front in the travelling direction, such control is not always an essential feature. In order to realize the reduction in engine noise within station platforms, which is an object of the present invention, it is only necessary to preferentially start the engine that is not located at the station platform (that is, the engine mounted on a vehicle having left the station platform or on a vehicle before entering the station platform) and stop the engine mounted on the vehicle located at the station platform to the extent possible. Therefore, it is not always necessary to control the engines so that they are started or stopped sequentially from the front in the travelling direction, and the control may be performed such that, when the train departs from the station, the engine mounted on a vehicle that has left the station platform is preferentially started, while, when the train enters the station, the engine mounted on a vehicle that has entered the station platform is preferentially stopped. Alternatively, the object of the present invention may be achieved by performing control so that plural engines mounted on plural vehicles are started or stopped in a specific order.

It should be noted that although this embodiment shows the case where the integrated control unit 14 issues engine control commands for individually controlling the start/stop of the engines 2a to 2z, the integrated control unit 14 is not always an essential element of the present invention. Alternatively, the advantages of the present invention can be achieved by causing the engine controller mounted on each of the vehicles to obtain running position information, running speed information, or running time information of the train or the corresponding vehicle and control the start/stop or rotational speed of the engine.

It should be noted that although in this embodiment, the description has been made using as an example the train in which the three or more vehicles equipped with the engines are coupled together, as shown in FIGS. 1 to 3, the present invention is also applicable to an embodiment in which, in a train with two vehicles equipped with engines, for example, the engines are mounted on the leading vehicle and the tail end.

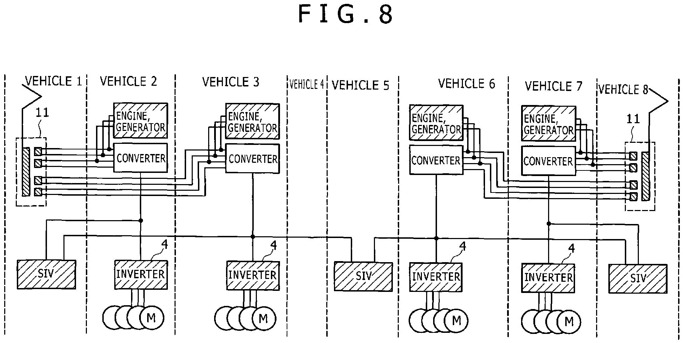

While the above description is made using the construction of FIG. 1 as an example, this embodiment may include a construction such as shown in FIG. 8. More specifically, although FIG. 1 shows the case where the auxiliary power unit (SIVs) is mounted on each of the vehicles, the auxiliary power unit may be mounted on the passenger coach that is not equipped with the engine as shown in FIG. 8. In this case, space for mounting the auxiliary power unit is easily obtained.

Furthermore, although the engines are started or stopped sequentially from those toward the front in the travelling direction as described above, in the case where the passenger coaches are interposed between Vehicles 2 and 3 and Vehicles 6 and 7 as shown in FIG. 8, it is not always necessary to start or stop the engines sequentially from the front, and the arrangement may be such that after the engines of Vehicles 2 and 3 are started together, the engines of Vehicles 6 and 7 are started together.

### Second Embodiment

In the first embodiment, the description is in terms of the diesel hybrid rolling stock including the power storage devices, in which the power to drive the vehicle and the power to the auxiliary equipment, such as an air conditioner and lighting, are supplied from the storage battery, in a nonoperating state of the engine, as for example when the train is stopped at the station. On the other hand, in a second embodiment, the rolling stock not equipped with the storage batteries for driving will be described because the object of the present invention can be also achieved by an embodiment in which the storage battery is not used and a minimum required engine is always kept in operation for the supply of power to the auxiliary equipment or initial power running of the vehicle.

It should be noted that, in this embodiment, the same construction and control as the first embodiment will not be described.

In this embodiment, even while the train is stopped at the station, at least one engine is kept in operation so as to produce the minimum electricity required to generate power to cause the vehicle to start to move. Furthermore, although the power to the auxiliary equipment may be supplied by this engine, alternatively, it is possible to reduce the capacity of the engine operating while the train is stopped at the station and reduce noise within station platforms by refraining from the use of the auxiliary equipment when the vehicle starts to move or performing the supply of power from a 110-volt battery, serving as a control power supply, to a necessary portion of the auxiliary equipment.

In this embodiment, the control operation is the same as the first embodiment, in which, when the train departs from or arrives at the station, the engine mounted on a vehicle that has left the station platform are preferentially started and the engines on the vehicle located at the station platform are stopped. Also, the construction of the rolling stock is similar to that shown in FIG. 1 except that it does not have the power storage devices and the power storage controllers.

According to this embodiment, it is possible to reliably stop the engines 2a to 2c within the station platform and reduce engine noise within the station platform.

It should be noted that although in this embodiment, the description has been made using as an example the train in which the three or more vehicles equipped with the engines are coupled together, as shown in FIGS. 1 and 2, the present invention is also applicable to an embodiment in which, in a train with two vehicles equipped with engines, for example, the engines are mounted on the leading vehicle and the tail end vehicle.

### Third Embodiment

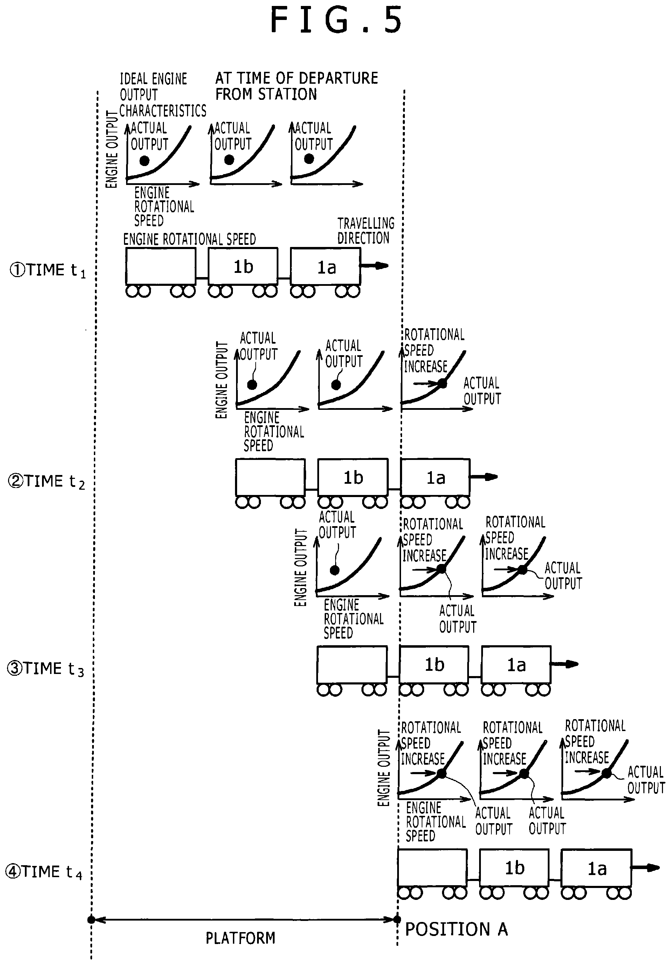

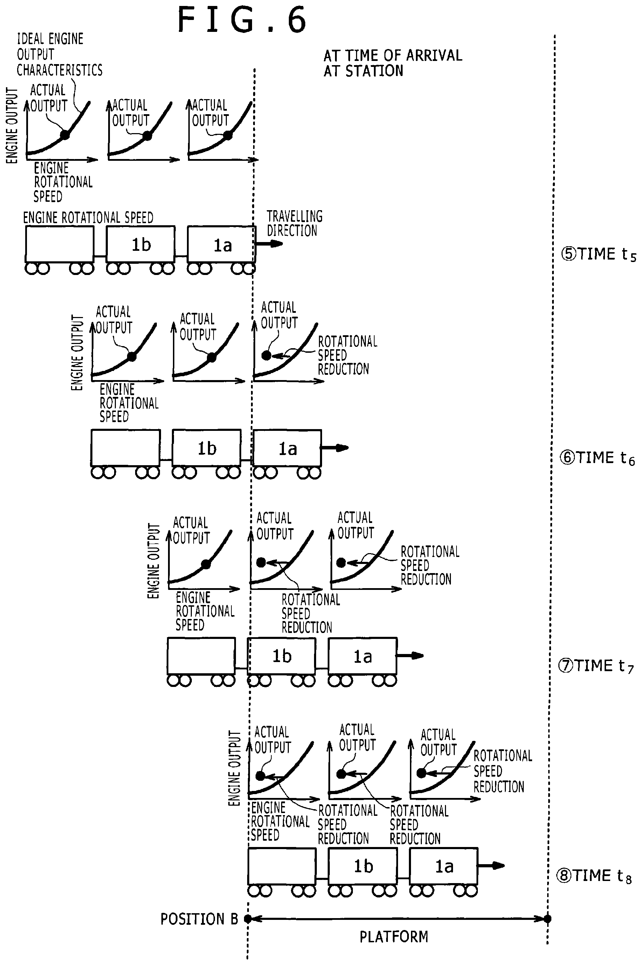

FIGS. 5 and 6 show a rolling stock control method according to a third embodiment of the present invention.

The third embodiment differs from the first embodiment in that while the engines 2a to 2z are individually controlled as to start/stop in the first embodiment, the engines 2a to 2z are individually controlled as to output (rotational speed) in the third embodiment.

It should be noted that, in this embodiment, the same construction and control as the first embodiment will not be described.

In the diesel hybrid rolling stock shown in FIG. 1, the engine controllers 9a to 9z mounted on the vehicles 1a to 1z are configured to individually control the output (rotational speed) of the engines 2a to 2z on the vehicles 1a to 1z on the basis of vehicle running position.

More specifically, the integrated control unit 14 that exercises control over the engine controllers 9a to 9z is provided in the leading vehicle 1a where the driver's cab is located, and the communication line 15 is connected between the integrated control unit 14 and the engine controllers 9a to 9z so that the output (rotational speed) of the engines 2a to 2z can be individually controlled on the basis of engine control commands from the integrated control unit 14. It should be noted that the integrated control unit 14 does not need to be mounted on the leading vehicle 1a where the driver's cab is located. Furthermore, the integrated control unit 14 obtains vehicle running position information from outside and issues engine control commands (the output (rotational speed) of the engines 2a to 2z) on the basis of the obtained vehicle running position information, thereby individually controlling the output (rotational speed) of the engines 2a to 2z of the vehicles 1a to 1z according to the running position.

Here, in the relationship between output and rotational speed of an engine, as shown in FIG. 4, there are ideal output (vertical axis) -rotational speed (horizontal axis) characteristics of the engine, which are determined from the viewpoints of fuel consumption reduction and emission control. Therefore, preferably, the operating point of the engine lies on the ideal characteristics as much as possible.

FIG. 5 shows a method for individually controlling the engines when the train departs from the station. When the train departs from the station, firstly, the leading vehicle 1a passes through an end (position A) of the station platform. Until the leading vehicle 1a has passed through the end (position A) of the station platform (time t₁), the output (rotational speed) of all the engines 2a to 2z is minimized from the viewpoint of reducing engine noise within the station platform, and the supply of power from the power storage devices 6a to 6z to the inverters 5a to 5z and the auxiliary power units 7a to 7z is performed. At time t₂, when the leading vehicle 1a passes through the end (position A) of the station platform, in order to place the operating point of the engine 2a of the leading vehicle 1a on the ideal characteristics, the integrated control unit 14 gives an output (rotational speed) increase command to the engine 2a of the leading vehicle 1a to increase the output (rotational speed) of the engine 2a. Furthermore, at time t₃, when the second vehicle 1b passes through the end (position A) of the station platform, in order to place the operating point of the engine 2b of the second vehicle 1b on the ideal characteristics, the integrated control unit 14 gives an output (rotational speed) increase command to the engine 2b of the second vehicle 1b to increase the output (rotational speed) of the engine 2b. Subsequently, in the same manner as above, the output (rotational speed) of the engines 2c to 2z mounted on the vehicles 1c to 1z is sequentially increased each time the vehicles 1c to 1z in the train pass through the end (position A) of the station platform.

FIG. 6 shows a method for individually controlling the engines when the train arrives at the station. When the train arrives at the station, firstly, the leading vehicle 1a passes through an end (position B) of the station platform. At time t₆, when the leading vehicle 1a passes through the end (position B) of the station platform, the integrated control unit 14 gives an output (rotational speed) reduction command to the engine 2a mounted on the leading vehicle 1a to reduce the output (rotational speed) of the engine 2a. At this time, in the leading vehicle 1a, the output of the engine 2a decreases, and therefore the supply of power from the power storage device 6a to the inverter 5a and the auxiliary power unit 7a is increased. Furthermore, at time t₇, when the second vehicle 1b passes through the end (position B) of the station platform, the integrated control unit 14 gives an output (rotational speed) reduction command to the engine 2b mounted on the second vehicle 1b to reduce the output (rotational speed) of the engine 2b. Subsequently, in the same manner as above, the output (rotational speed) of the engines 2c to 2z mounted on the vehicles 1c to 1z is sequentially reduced each time the vehicles 1c to 1z in the train pass through the end (position B) of the station platform.

Thus, as shown in FIG. 5, when the train departs from the station, the engines are increased in output (rotational speed) sequentially from those on the vehicles toward the front of the train, in the order in which the vehicles leave the station platform (pass through the position A). Furthermore, as shown in FIG. 6, when the train arrives at the station, the engines are reduced in output (rotational speed) sequentially from those on the vehicles toward the front of the train, in the order in which the vehicles approach the station platform (pass through the position B).

Here, examples of vehicle position detection methods include a method using position detectors such as transponders (radios), optical sensors, and infrared sensors. The position detectors are installed on the ground and vehicle to detect that a vehicle has passed through a predetermined position. The integrated control unit 14 receives, from the position detector installed on vehicle, a signal indicating that the vehicle has passed through the predetermined position, and, on the basis of the position information, individually controls the start/stop of the engines 2a to 2z mounted on the vehicles 1a to 1z. Here, the position detector installed on vehicle may be mounted on each of the vehicles 1a to 1z. Alternatively, the arrangement may be such that the position detector is only mounted on the leading vehicle 1a and the passage of the second and subsequent vehicles 1b to 1z through the position is calculated on the basis of the passage of the first vehicle 1a, the lengths of the vehicles 1a to 1z as previously stored in the integrated control unit 14, etc.

As another position detection method, GPS (Global Positioning System) may be used. The integrated control unit 14 receives from the GPS a signal indicating that a vehicle has passed through a predetermined position and calculates the passage of the vehicles 1a to 1z through the position on the basis of the lengths of the vehicles 1a to 1z as previously stored in the integrated control unit 14, and, on the basis of the position information, individually controls the start/stop of the engines 2a to 2z mounted on the vehicles 1a to 1z.

It should be noted that, although in this embodiment, there is shown the case where the individual start/stop control of the engines 2a to 2z mounted on the vehicles 1a to 1z is performed on the basis of vehicle running position, such control may be performed on the basis of vehicle running speed or vehicle running time, rather than vehicle running position.

It should be noted that, in this embodiment, an example of the diesel hybrid rolling stock having the power storage devices is shown, in which, when the engine output (rotational speed) is low, the power to drive the vehicle and the power to the auxiliary equipment, such as an air conditioner and lighting, are supplied from the storage battery. However, because the engine is low in output (rotational speed) yet operating, the power to drive the vehicle can be obtained without using the storage battery although its acceleration performance is low. Also, as for the supply of power to the auxiliary equipment, such as an air conditioner and lighting, the case where the storage battery is not provided can be addressed by refraining from the use of the auxiliary equipment or performing the supply of power from a 110-volt battery to only necessary auxiliary equipment. Therefore, the rolling stock according to this embodiment may include the diesel rolling stock having no power storage device.

According to this embodiment, it is possible to reduce the output (rotational speed) of the engines 2a to 2c within the station platform and reduce engine noise within the station platform.

### Fourth Embodiment

In the first and third embodiments, the description has been made in terms of the train including the power storage devices, in which the supply of power from the power storage devices to the auxiliary power units is performed when the train is stopped at the station. However, problems exist with respect to the introduction cost of the power storage devices and complications in charge and discharge control of the power storage devices. Furthermore, in the second embodiment, at least one engine is operating for the supply of power to the auxiliary power units even when the train is stopped at the station, which causes noise problems within the station platform.

In a fourth embodiment, the station is provided with a power supply facility, and the train includes a pantograph or a current collector shoe for receiving power from the power supply facility, thereby, even if the train has no storage battery, ensuring the supply of power to the auxiliary power units while stopping the engine for noise reduction when the train is stopped at the station.

It should be noted that the fourth embodiment have the same function as the first and second embodiments except that, when the train is stopped at the station, the pantograph or the current collector shoe receives power from the power supply facility of the station to supply the power to the auxiliary power units.

According to this embodiment, it is also possible to stop the engines or reduce the output (rotational speed) of the engines within station platforms and reduce engine noise within station platforms.

### Fifth Embodiment

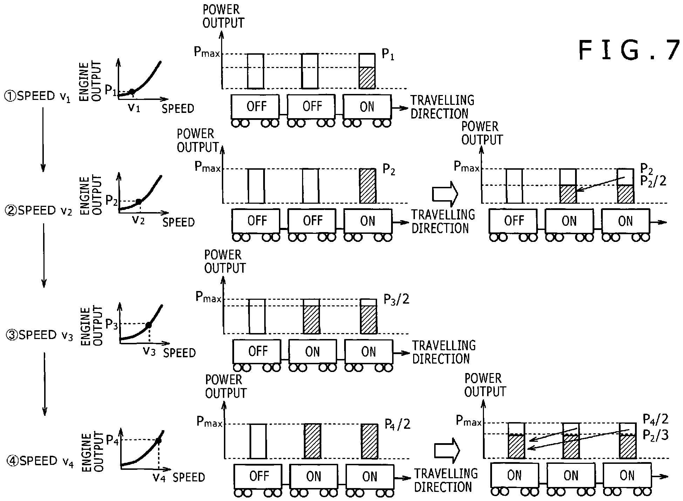

FIG. 7 shows a rolling stock control method according to a fifth embodiment of the present invention. The fifth embodiment differs from the first and second embodiments in the following respect. In the first and second embodiments, the integrated control unit 14 individually controls the engines 2a to 2z (as to start/stop or increase/decrease in output (rotational speed)) on the basis of vehicle running position, vehicle running speed, or vehicle running time. In the fifth embodiment, on the other hand, the integrated control unit 14 individually controls the engines 2a to 2z (as to start/stop, increase/decrease in output (rotational speed)) depending on the power required for the train (hereinafter referred to as required train power).

In the diesel hybrid rolling stock shown in FIG. 1, the individual output (rotational speed) control of the engines 2a to 2z mounted on the vehicles 1a to 1z can be performed depending on required train power.

More specifically, the integrated control unit 14 that exercises control over the engine controllers 9a to 9z of the engines 2a to 2z is provided in the leading vehicle 1a where the driver's cab is located, and the communication line 15 is connected between the integrated control unit 14 and the engine controllers 9a to 9z of the engines 2a to 2z so that the output (rotational speed) of the engines 2a to 2z can be individually controlled on the basis of engine control commands from the integrated control unit 14. It should be noted that the integrated control unit 14 does not need to be mounted on the leading vehicle 1a where the driver's cab is located. Furthermore, the integrated control unit 14 issues engine control commands (the output (rotational speed) of the engines 2a to 2z) depending on required train power, thereby individually controlling the output (rotational speed) of the engines 2a to 2z of the vehicles 1a to 1z depending on the required train power. Here, because in rolling stock the required train power can be calculated from vehicle speed, the integrated control unit 14 normally calculates the required train power from vehicle speed.

FIG. 7 shows a method for individually controlling the engines when the train accelerates. When the train starts to accelerate, speed (v₁) is low and required drive power P₁ is also small, and therefore the required drive power P₁ is provided by a single engine. When the speed increases and reaches speed v₂, and required drive power P₂ at that time exceeds maximum power Pₘₐₓ that can be provided by the single engine, the integrated control unit 14 starts a second engine and adjusts the output (rotational speed) of the two engines so that the two engines provide, equal shares of the required drive power P₂. When the speed increases further, the two engines still provide equal shares of required drive power P₃ at speed v₃. When the speed increases still further and reaches speed v₄ and an equal share (P₄/2) of required drive power P₄ at that time to be provided by each of the two engines exceeds the maximum power Pₘₐₓ that can be provided by each of the two engines, the integrated control unit 14 starts a third engine and adjusts the output (rotational speed) of the three engines so that the three engines provide equal shares of the required drive power P₄.

Subsequently, in the same manner as above, when the required drive power increases with increasing speed and an equal share (Pₙ/n) of required drive power Pₙ to be provided by each of n number of engines (2a, 2b...2n) exceeds the maximum power Pₘₐₓ that can be provided by each of the engines (2a, 2b...2n), the integrated control unit 14 starts an (n+1) th engine and adjusts the output (rotational speed) of the n+1 number of engines (2a, 2b, 2c, ...2n+1) so that the n+1 number of engines (2a, 2b, 2c,...2n+1) provide equal shares of the required drive power Pₙ.

In this embodiment, the required drive power is calculated from vehicle speed, and, on the basis of the required train power at that time, the engines 2a to 2z are individually controlled (as to start/stop, increase/decrease in output (rotational speed)). However, because in rolling stock the torque remains constant, the acceleration also becomes constant, and, if time is identified, speed is readily determined. In the same manner, if position is identified, speed is readily determined. Therefore, the required drive power can be calculated not only on the basis of vehicle running speed but vehicle running position or vehicle running time.

It should be noted that, in this embodiment, an example of the diesel hybrid rolling stock having the power storage devices is shown, in which, when the engine output (rotational speed) is low, the power to drive the vehicle and the power to the auxiliary equipment, such as an air conditioner and lighting, are supplied from the storage battery. However, because the engine is low in output (rotational speed) yet operating, the power to drive the vehicle can be obtained without using the storage battery although its acceleration performance is low. Also, as for the supply of power to the auxiliary equipment, such as an air conditioner and lighting, the case where the storage battery is not provided can be addressed by refraining from the use of the auxiliary equipment or performing the supply of power from a 110-volt battery to only necessary auxiliary equipment. Therefore, the rolling stock according to this embodiment may include the diesel rolling stock having no power storage device.

Here, it is known that the engine reaches its peak efficiency when it is operating at a high rotational speed near the rated output, as shown in FIG. 4.

According to the embodiments of the present invention, the output (rotational speed) of the engines 2a to 2z mounted on the vehicles 1a to 1z are individually controlled depending on required train power, thereby allowing the operating points of the engines 2a to 2z to hover near the rated output. Thus, the engine efficiency can be increased, and engine fuel consumption can be expected to be reduced.

It should be noted that although in FIG. 7, there is shown the case where the engines are started sequentially from the leading vehicle, the order of starting of the engines is not limited thereto, and the engines may be started in any order. As shown in FIG. 7, if the engines are started sequentially from the leading vehicle, in addition to the advantage of increased engine efficiency, the advantage of engine noise reduction within the station platform can be expected.

## Claims

1. A method for controlling a train with a plurality of railway vehicles (1a, 1b, 1z) coupled together, each of the vehicles comprising: an engine (2a, 2b, 2z); a generator (3a, 3b, 3z) that is driven by the engine; a converter (4a, 4b, 4z) that converts alternating current from the generator into direct current; an inverter (5a, 5b, 5z) that converts direct current from the converter into variable voltage, variable frequency alternating current; an auxiliary power unit (7a, 7b, 7z) that is connected in parallel with an output of the converter to supply direct current to auxiliary equipment such as an air conditioner; and at least one or more AC electric motors (8a, 8b, 8z) that are driven by the inverter, **characterised in that** the method comprises:
when the train departs from a station, the engines are started or increased in rotational speed or output in order from the engine mounted on a vehicle that has left a station platform; and/or
when the train enters a station, the engines are stopped or reduced in rotational speed or output in order from the engine mounted on a vehicle that has entered a station platform.

2. The method according to claim 1, further comprising:
at other times, individually controlling the engines on the vehicles so that the engines on the vehicles are started or stopped in a further specific order on the basis of running position information, running speed information, or running time information showing the time that has elapsed since departure of the vehicles.

3. The method according to claim 2, further comprising:
individually controlling the engines on the vehicles so that the engines are started or stopped in order from the engine on a vehicle located toward a front of the train.

4. The method according to claim 1, further comprising:
at other times, individually controlling the engines on the vehicles so that the engines on the vehicles are increased or decreased in rotational speed or output in a further specific order on the basis of running position of the vehicles.

5. The method according to claim 4, further comprising:
individually controlling the engines on the vehicles so that the engines are increased or decreased in rotational speed or output in order from the engine on a vehicle located toward a front of the train.

6. The method according to claim 1, further comprising:
at other times, individually controlling the engines on the vehicles so that the engines on the vehicles are started or stopped in a specific order, depending on power required to drive the train.

7. The method according to claim 6, further comprising:
individually controlling the engines on the vehicles so that the engines are started or stopped in order from the engine on a vehicle located toward a front of the train.

8. The method according to claim 1, further comprising:
at other times, individually controlling the engines on the vehicles so that the engines on the vehicles are increased or decreased in rotational speed or output in a specific order, depending on power required to drive the train.

9. The method according to claim 8, further comprising:
individually controlling the engines on the vehicles so that the engines are increased or decreased in rotational speed or output in order from the engine on a vehicle located toward a front of the train.

10. The method according to any one of claims 6 to 9, further comprising:
calculating the required drive power on the basis of vehicle running speed, vehicle running position, or vehicle running time.

## Patentansprüche

1. Verfahren zur Steuerung eines Zugs mit einer Vielzahl von miteinander gekoppelten Schienenfahrzeugen (1a, 1b, 1z), wobei jedes der Fahrzeuge Folgendes umfasst: einen Motor (2a, 2b, 2z); einen Generator (3a, 3b, 3z), der vom Motor angetrieben wird; einen Wandler (4a, 4b, 4z), der Wechselstrom aus dem Generator in Gleichstrom umwandelt; einen Wechselrichter (5a, 5b, 5z), der Gleichstrom aus dem Wandler in spannungsvariablen, frequenzvariablen Wechselstrom umwandelt; eine Zusatzleistungseinheit (7a, 7b, 7z), die mit einem Ausgang des Wandlers parallel geschaltet ist, um einem Zusatzgerät, beispielsweise einer Klimaanlage, Gleichstrom zuzuführen; und mindestens einen oder mehrere Wechselstrom-Elektromotoren (8a, 8b, 8z), die vom Wechselrichter angetrieben werden, **dadurch gekennzeichnet, dass** das Verfahren Folgendes umfasst:
wenn der Zug von einem Bahnhof abfährt, werden die Motoren in der Reihenfolge von dem Motor, der auf einem Fahrzeug montiert ist, das einen Bahnsteig verlassen hat, gestartet oder in ihrer Drehzahl oder Ausgangsleistung erhöht; und/oder
wenn der Zug in einen Bahnhof einfährt, werden die Motoren in der Reihenfolge von dem Motor, der auf einem Fahrzeug montiert ist, das in einen Bahnsteig eingefahren ist, angehalten oder in ihrer Drehzahl oder Ausgangsleistung verringert.

2. Verfahren gemäß Anspruch 1, ferner umfassend:
zu anderen Zeiten ein jeweiliges Steuern der Motoren auf den Fahrzeugen, sodass die Motoren auf den Fahrzeugen in einer weiteren spezifischen Reihenfolge auf Basis von Laufpositionsinformationen, Laufgeschwindigkeitsinformationen oder Laufzeitinformationen, welche die Zeit angeben, die seit Abfahrt der Fahrzeuge vergangen ist, gestartet oder angehalten werden.

3. Verfahren gemäß Anspruch 2, ferner umfassend:
ein jeweiliges Steuern der Motoren auf den Fahrzeugen, sodass die Motoren in der Reihenfolge von dem Motor auf einem Fahrzeug, das in Richtung zu einem vorderen Teil des Zugs angeordnet ist, gestartet oder angehalten werden.

4. Verfahren gemäß Anspruch 1, ferner umfassend:
zu anderen Zeiten ein jeweiliges Steuern der Motoren auf den Fahrzeugen, sodass die Motoren auf den Fahrzeugen in ihrer Drehzahl oder in ihrer Ausgangsleistung in einer weiteren spezifischen Reihenfolge auf Basis einer Laufposition der Fahrzeuge erhöht oder verringert werden.

5. Verfahren gemäß Anspruch 4, ferner umfassend:
ein jeweiliges Steuern der Motoren auf den Fahrzeugen, sodass die Motoren in ihrer Drehzahl oder in ihrer Ausgangsleistung in der Reihenfolge von dem Motor auf einem Fahrzeug, das in Richtung zu einem vorderen Teil des Zugs angeordnet ist, erhöht oder verringert werden.

6. Verfahren gemäß Anspruch 1, ferner umfassend:
zu anderen Zeiten ein jeweiliges Steuern der Motoren auf den Fahrzeugen, sodass die Motoren auf den Fahrzeugen in einer spezifischen Reihenfolge je nach der zum Antreiben des Zugs erforderlichen Leistung gestartet oder angehalten werden.

7. Verfahren gemäß Anspruch 6, ferner umfassend:
ein jeweiliges Steuern der Motoren auf den Fahrzeugen, sodass die Motoren in der Reihenfolge von dem Motor auf einem in Richtung zu einem vorderen Teil des Zugs angeordneten Fahrzeug gestartet oder angehalten werden.

8. Verfahren gemäß Anspruch 1, ferner umfassend:
zu anderen Zeiten ein jeweiliges Steuern der Motoren auf den Fahrzeugen, sodass die Motoren auf den Fahrzeugen erhöhte oder verringerte Drehzahl oder Ausgangsleistung in einer spezifischen Reihenfolge je nach der zum Antreiben des Zugs erforderlichen Leistung aufweisen.

9. Verfahren gemäß Anspruch 8, ferner umfassend:
ein jeweiliges Steuern der Motoren auf den Fahrzeugen, sodass die Motoren erhöhte oder verringerte Drehzahl oder Ausgangsleistung in der Reihenfolge von dem Motor auf einem in Richtung zu einem vorderen Teils des Zugs angeordneten Fahrzeug aufweisen.

10. Verfahren gemäß einem der Ansprüche 6 bis 9, ferner umfassend:
Berechnen der erforderlichen Antriebsleistung auf Basis von Fahrzeuglaufgeschwindigkeit, Fahrzeuglaufposition oder Fahrzeuglaufzeit.

## Revendications

1. Procédé de commande d'un train avec une pluralité de véhicules ferroviaires (1a, 1b, 1z) couplés ensemble, chacun des véhicules comprenant : un moteur (2a, 2b, 2z) ; un générateur (3a, 3b, 3z) qui est entraîné par le moteur ; un convertisseur (4a, 4b, 4z) qui convertit du courant alternatif provenant du générateur en courant continu ; un onduleur (5a, 5b, 5z) qui convertit le courant continu provenant du convertisseur en courant alternatif à fréquence variable et tension variable; une unité d'alimentation auxiliaire (7a, 7b, 7z) qui est connectée en parallèle avec une sortie du convertisseur pour fournir du courant continu à un équipement auxiliaire tel qu'un climatiseur ; et au moins un ou plusieurs moteurs électriques à courant alternatif (8a, 8b, 8z) entraînés par l'onduleur, **caractérisé en ce que** le procédé comprend :
lorsque le train part d'une gare, les moteurs sont démarrés ou augmentés en termes de vitesse de rotation ou de sortie dans l'ordre à partir du moteur monté sur un véhicule qui a quitté une plate-forme de gare ; et/ou
lorsque le train entre dans une gare, les moteurs sont arrêtés ou diminués en termes de vitesse de rotation ou de sortie dans l'ordre à partir du moteur monté sur un véhicule qui est entré dans une plate-forme de gare.

2. Procédé selon la revendication 1, comprenant en outre :
à d'autres moments, la commande individuelle des moteurs sur les véhicules de sorte que les moteurs sur les véhicules soient démarrés ou arrêtés dans un ordre spécifique supplémentaire sur la base des informations de position de circulation, des informations de vitesse de circulation ou des informations de temps de circulation indiquant le temps qui s'est écoulé depuis le départ des véhicules.

3. Procédé selon la revendication 2, comprenant en outre :
une commande individuelle des moteurs sur les véhicules afin que les moteurs soient démarrés ou arrêtés dans l'ordre à partir du moteur sur un véhicule situé vers l'avant du train.

4. Procédé selon la revendication 1, comprenant en outre :
à d'autres moments, une commande individuelle des moteurs sur les véhicules de sorte que les moteurs sur les véhicules soient augmentés ou diminués en termes de vitesse de rotation ou de sortie dans un ordre spécifique supplémentaire en fonction de la position de circulation des véhicules.

5. Procédé selon la revendication 4, comprenant en outre :
Une commande individuelle des moteurs sur les véhicules de sorte que les moteurs soient augmentés ou diminués en termes de vitesse de rotation ou de sortie dans l'ordre à partir du moteur sur un véhicule situé vers l'avant du train.

6. Procédé selon la revendication 1, comprenant en outre :
à d'autres moments, une commande individuelle des moteurs sur les véhicules de sorte que les moteurs sur les véhicules soient démarrés ou arrêtés dans un ordre spécifique, en fonction de la puissance nécessaire pour entraîner le train.

7. Procédé selon la revendication 6, comprenant en outre :
une commande individuelle des moteurs sur les véhicules de sorte que les moteurs sont démarrés ou arrêtés dans l'ordre à partir du moteur sur un véhicule situé vers l'avant du train.

8. Procédé selon la revendication 1, comprenant en outre :
à d'autres moments, une commande individuelle des moteurs sur les véhicules de sorte que les moteurs sur les véhicules soient augmentés ou diminués en termes de vitesse de rotation ou de sortie dans un ordre spécifique, en fonction de la puissance requise pour entraîner le train.

9. Procédé selon la revendication 8, comprenant en outre :
une commande individuelle des moteurs sur les véhicules de sorte que les moteurs soient augmentés ou diminués en termes de vitesse de rotation ou de sortie dans l'ordre à partir du moteur sur un véhicule situé vers l'avant du train.

10. Procédé selon l'une quelconque des revendications 6 à 9, comprenant en outre :
le calcul de la puissance d'entraînement requise en fonction de la vitesse de circulation de véhicule, de la position de circulation de véhicule, ou du temps de circulation de véhicule.
